# EUROPÄISCHE PATENTANMELDUNG

(11) **EP 0 622 607 A1**
(43) Veröffentlichungstag der Anmeldung: **02.11.1994**
(21) Anmeldenummer: 94105705.1
(22) Anmeldetag: 13.04.1994
(51) Int. Cl.: G01B 7/10

(54) **Verfahren und Mittel zur zerstörungsfreien Bestimmung der Schichtdicke von aufgebrachten mineralischen Schichten und/oder der Bestimmung der Lage von unterhalb derartiger mineralischer Schichten verlegten Materialien**

(30) Priorität: 14.04.1993 DE 4312172
(71) Anmelder: NAUE-FASERTECHNIK GMBH & CO. KG, D-32312 Lübbecke (DE)
(72) Erfinder: Pries, Jürgen Heinrich, D-23701 Süsel (DE); Saathoff, Fokke, Dr., D-32312 Lübbecke (DE); Albers, Klaus-Hermann, D-32312 Lübbecke (DE)
(74) Vertreter: Steffens, Joachim, Dr.

(57) **Zusammenfassung**

Es wird ein Verfahren mit dazugehörenden Mitteln zur Verfügung gestellt, das zur zerstörungsfreien Bestimmung der Schichtdicke von aufgebrachten mineralischen Schichten und/oder zur zerstörungsfreien Bestimmung der Lage von unterhalb der mineralischen Schicht verlegten Materialien geeignet ist. Bei der Durchführung dieses Verfahrens wird vor dem Aufbringen einer mineralischen Schicht mindestens ein elektrisch isolierter Leiter, nachfolgend kurz mit Metalleiter bezeichnet, auf dem Untergrund positioniert und anschließend nach dem Aufbringen der mineralischen Schicht ein elektrisches Signal in die Metalleiter eingespeist oder induziert. Das von den Metalleitern abgestrahlte Signal wird an der Oberseite der mineralischen Schicht von einem Empfänger detektiert und aus der Laufzeit und/oder der Absorption wird die Schichtdicke der mineralischen Schicht bzw. die Lage der unterhalb der aufgebrachten mineralischen Schicht verlegten Materialien ermittelt.

## Beschreibung

Die Erfindung betrifft ein Verfahren und Mittel zur zerstörungsfreien Bestimmung der Schichtdicke von aufgebrachten mineralischen Schichten und/oder der Bestimmung der Lage von unterhalb derartiger mineralischer Schichten verlegten Materialien.

Es sind zwei Verfahren zur Schichtdickenmessung von aufgeschütteten mineralischen Schichten bekannt. Bei dem ersten Verfahren wird die mineralische Schicht oder Dichtung aufgegraben, so daß die Dicke bis zu dem darunterliegenden Untergrund gemessen werden kann. Nachteilig bei diesem ersten Verfahren ist die zeitaufwendige Vorgehensweise, die pro Meßpunkt ca. 1 Stunde erfordert. Zusätzlich wird durch die Aufgrabung die mineralische Dichtung oder Schicht zerstört, die anschließend wieder fachgerecht repariert werden muß.

Bei einem zweiten Verfahren (Flächennivellement) wird ein Gitterraster über die Einbaufläche bzw. den Untergrund gelegt, und die Gitterpunkte werden höhenmäßig erfaßt. Nach dem Einbau der mineralischen Schicht wird die Höhe der Gitter- oder Rasterpunkte erneut festgehalten. Anhand der Differenz wird die Einbaudicke errechnet.

Nachteilig bei dem zweiten Verfahren ist, daß die Schichtstärken bei setzungsempfindlichem Untergrund zum Teil nicht richtig erfaßt werden. Ein weiterer Nachteil besteht darin, daß viele Massen zwischen den Raster- oder Gitterpunkten unberücksichtigt bleiben, wenn die Raster- oder Gitterpunkte aus Kostengründen in einem größeren Abstand voneinander entfernt sind. Zusätzlich ist während der Messung die eventuell empfindliche Oberfläche längere Zeit der Witterung ausgesetzt und kann in dieser Zeit beschädigt werden.

Aufgabe der Erfindung ist es daher, ein Verfahren zur zerstörungsfreien Bestimmung der Schichtdicke von aufgebrachten mineralischen Schichten und Mittel zur Durchführung des Verfahrens zu entwickeln. Gleichzeitig soll ein solches Verfahren und die entsprechenden Mittel dazu geeignet sein, die Lage von unterhalb derartiger mineralischer Schichten verlegten Materialien zu bestimmen, beispielsweise die Überlappungsbreite von Geotextilien bzw. Geokunststoffen.

Gelöst wird diese Aufgabe gemäß der vorliegenden Erfindung dadurch, daß man
(a) vor dem Aufbringen der mineralischen Schicht mindestens einen isolierten Metalleiter, nachfolgend kurz mit Metalleiter bezeichnet, auf dem Untergrund, auf dem die mineralische Schicht aufgebracht werden soll, und/oder in den Materialien, die unterhalb der mineralischen Schicht verlegt werden sollen, positioniert,
(b) nach dem Aufbringen der mineralischen Schicht mittels eines Senders ein Signal, insbesondere ein elektromagnetisches Signal, in den Metalleiter einspeist oder induziert,
(c) das von dem Metalleiter abgestrahlte Signal von einem an der Oberseite der aufgebrachten mineralischen Schicht positionierten Empfänger detektiert, und
(d) aus der Laufzeit und/oder der Absorption des Signals die Schichtdicke der mineralischen Schicht und/oder die Lage der unterhalb der mineralischen Schicht verlegten Materialien ermittelt.

Bei dem erfindungsgemäßen Verfahren wird somit als erstes vor dem Aufbringen der mineralischen Schicht mindestens ein Metalleiter, vorzugsweise in Verbindung mit den unterhalb der mineralischen Schicht zu verlegenden Materialien, auf dem Untergrund positioniert, auf dem die mineralische Schicht oder ein anderer mineralischer Baustoff aufgebracht werden soll.

Nachdem dies geschehen ist, wird auf die so vorbereitete Grundfläche die mineralische Schicht in der gewünschten Schichtdicke aufgebracht.

Zur Bestimmung der Soll-Schichtdicke der aufgebrachten mineralischen Schicht wird dann mittels eines Senders ein Signal in den Metalleiter eingespeist oder induziert. Bei dem zugeführten Signal kann es sich um eine hochfrequente Wechselspannung oder eine niederfrequente Wechselspannung handeln. Das von dem Metalleiter abgestrahlte Signal wird von einem an der Oberseite der mineralischen Schicht positionierten Empfänger detektiert.

Über die Laufzeit und/oder die Absorption des Signals wird die Schichtdicke der mineralischen Schicht und/oder die Lage der unter der mineralischen Schicht verlegten Materialien bestimmt.

Das Signal kann konstant oder im Impulsbetrieb mit einem bestimmten Tastverhältnis eingegeben werden.

Erfindungsgemäß können somit ein oder mehrere Metalleiter, die elektrisch isoliert sind, allein auf dem Untergrund verlegt werden, da die erfindungsgemäße Ortungsmöglichkeit mit den isolierten Metalleitern allein auch im gesamten Bereich des Bauwesens von großem Interesse ist, beispielsweise bei der Bestimmung der Verankerungslänge von Felsankern.

Vorzugsweise werden jedoch die zur Durchführung des erfindungsgemäßen Verfahrens notwendigen Metalleiter in Verbindung mit bahnförmigen Flächengebilden verlegt. Unter den allgemeinen Begriff Flächengebilde fallen hier insbesondere Dichtungsbahnen, Geotextilien, Geokunststoff-Folien und Geokunststoffgitter sowie deren Verbundstoffe untereinander. Derartige Flächengebildebahnen sind in der Regel ca. 4 m breit und je nach Material 30 bis 100 m lang.

Zu Geotextilien gehören beispielsweise Gewebe, Gewirke und Vliesstoffe. Die Vliesstoffe sind vorzugsweise mechanisch verfestigt, sie können aber auch thermisch (z. B. durch Zusammenschmelzen der Fasern) oder chemisch (z. B. mittels Bindemitteln) verfestigt sein.

Zu den Flächengebilden, die gemäß der vorliegenden Erfindung eingesetzt werden können, gehören auch aus Geotextilien hergestellte Drainage- und Dichtungsmatten. Derartige Drainage- und Dichtungsmatten können beispielsweise durch Vernadeln von zwei Vliesstoffen mit dazwischenliegender Drainage- oder Bentonitschicht hergestellt sein.

Die Metalleiter können mit dem Flächengebilde auf die verschiedenste Weise verbunden werden, was sich naturgemäß insbesondere nach der Art des Flächengebildes richtet. Beispielsweise kann man die Metalleiter zwischen zwei Lagen des Flächengebildes an den vorgesehenen Stellen einbringen und anschließend die beiden Lagen miteinander so verbinden, daß die Metalleiter in ihrer vorgesehenen Position verbleiben. Dies kann je nach Material erreicht werden durch Vernadeln, durch Nähwirken, durch Verschweißen, durch Verkleben oder dergleichen.

Beim Vernadeln von zwei Lagen, von denen mindestens eine Lage aus einem Vliesstoff bestehen muß, gibt es grundsätzlich gemäß der vorliegenden Erfindungen drei Möglichkeiten.
(1) Die beiden Lagen werden durch solche Nadelbretter geführt, die in dem Bereich, wo die Metalleiter liegen, keine Nadeln aufweisen.
(2) Die beiden Lagen werden durch solche Nadelbretter geführt, die in dem Bereich, wo die Metalleiter liegen, Spezialnadeln aufweisen, die beispielsweise kein Kick-up (Kerbenüberstand) aufweisen.
(3) Man bildet die Isolierung des Metalleiters so stark bzw. fest aus, daß die Nadeln keine Beschädigung des Metalleiters verursachen können.

In gleicher Weise kann man verfahren, wenn man die Metallleiter vor der mechanischen Verfestigung des Vliesstoffes durch Vernadelung oder durch Nähwirken auf die ersten Lagen des Faserhaufwerks (Flor oder Vlies) auflegt und dann die restlichen Lagen des Faserhaufwerks aufbringt.

Sollen Geokunststoff-Folien, Dichtungsbahnen oder Geokunststoffgitter zum Einsatz kommen, so kann man diese mit dem Metalleiter beispielsweise durch Anschweißen, Ankleben oder Annähen oder dergleichen verbinden.

Im Falle der Anwendung von Geweben oder Nähwirkprodukten werden die Gewebe bzw. die Nähwirkprodukte vorteilhafterweise bereits bei ihrer Herstellung mit den Metalleitern verbunden, beispielsweise indem die Metalleiter an den entsprechenden Stellen als Kett- und/oder Schußelemente eingesetzt werden. Selbstverständlich kann man die Gewebe und Nähwirkprodukte aber auch in der Weise mit den Metalleitern verbinden, wie es vorstehend bei den Geokunststoff-Folien, Dichtungsbahnen bzw. den Geokunststoffgittern beschrieben wurde.

Sind als Flächengebilde Verbundstoffe aus den vorstehend genannten Materialien gemäß der vorliegenden Erfindung einzusetzen, so können die Metalleiter entweder vor dem Zusammenfügen der beiden verschiedenen Flächengebilde auf eines der Flächengebilde vorher aufgebracht oder eingebracht sein, oder aber die Metalleiter werden beim Zusammenfügen zwischen die Flächengebilde eingebracht oder die Metalleiter werden nach dem Zusammenfügen der beiden Flächengebilde nach einer der vorstehend angegebenen Methoden aufgebracht, beispielsweise wie bei den Geokunststoff-Folien oder Dichtungsbahnen.

Die Vorteile des erfindungsgemäßen Verfahrens und der verwendeten Mittel bestehen insbesondere darin, daß die Schichtdicken von aufgebrachten mineralischen Schichten und die Überlappungsbreite von unterhalb der mineralischen Schicht verlegten Geotextilien oder Geokunststoffen zerstörungsfrei bestimmt werden können.

Ferner ist es von Vorteil, daß bei setzungsempfindlichen Untergründen das Maß der Setzung, die durch den Einbau von Baustoffen oder durch Abbauprozesse im Untergrund ausgelöst worden sein kann, berücksichtigt wird. Es wird so tatsächlich die reale Dicke gemessen, d.h. daß selbst bei setzungsempfindlichen Böden gemäß der Erfindung trotzdem immer die gefragte Schichtstärke gemessen wird.

Ein weiterer Vorteil der Erfindung besteht darin, daß auch bei schräg angelegten Böschungen die tatsächliche Schichtdicke im kürzesten Abstand zum Untergrund gemessen werden kann. Diesen Vorteil gewährleisten die bekannten Verfahren nicht.

Durch die Verwendung von höherfrequenten Signalen, die als elektromagnetisches Signal von den Metalleitern abgestrahlt werden, lassen sich sogar Schichtdicken bis zu mehreren Metern bestimmen. Durch die Wahl und Variation der Frequenz des elektromagnetischen Signals ist eine Anpassung an die Dämpfung der zu vermessenden mineralischen Schicht möglich. Die Schichtdicke kann über die Laufzeit und über die Absorption bestimmt werden. Damit werden ein erfindungsgemäßes Meßverfahren und die dazugehörenden Mittel zur Durchführung dieses Verfahrens zur Verfügung gestellt, das in verschiedensten Meßbereichen an die bodenmäßigen Gegebenheiten und Eigenschaften der mineralischen Schichten anpaßbar ist.

Vorteilhafte Weiterbildungen der Erfindung sind ferner den Unteransprüchen zu entnehmen.

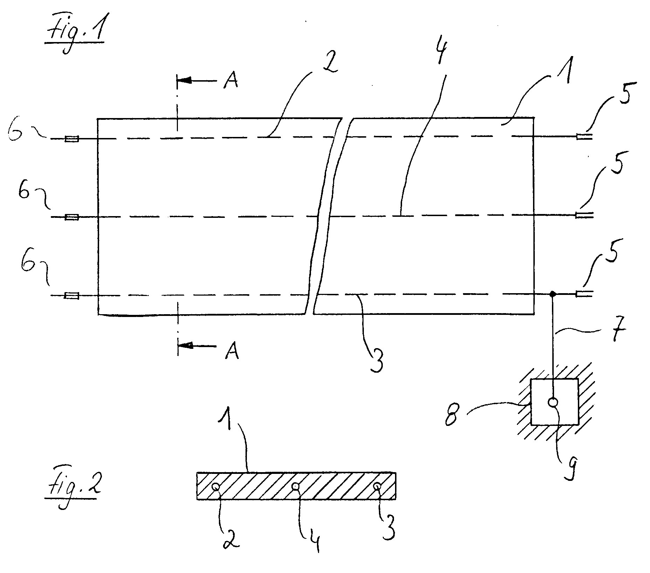

Nachfolgend wird die Erfindung anhand der Fig. 1 bis 3 näher beschrieben.
- Fig. 1: zeigt eine Draufsicht auf eine Ausführungsform eines erfindungsgemäßen Mittels zur Durchführung des erfindungsgemäßen Verfahrens;
- Fig. 2: zeigt einen Schnitt entlang der Schnittlinie A-A in Fig. 1;
In den Figuren haben die Bezugszeichen folgende Bedeutung:
- 1: Geotextilbahn
- 2: randseitiger Leiter
- 3: randseitiger Leiter
- 4: Mittelleiter
- 5: Buchsen
- 6: Stecker
- 7: Verbindungsleitung
- 8: zentraler Anschlußkasten
- 9: elektrischer Anschluß
Fig. 1 zeigt eine Draufsicht auf eine Flächengebildebahn. Die Flächengebildebahn 1 weist als Metalleiter 4 einen Mitteldraht und zwei randseitige Metalleiter 2,3 auf. Die Metalleiter 2,3,4 sind wie in Fig. 2 im Schnitt entlang der Schnittlinie A-A dargestellt als Runddrähte in der Flächengebildebahn 1 eingebettet. Die Metalleiter 2,3,4 können in allen Ausführungsformen als Runddrähte, Flachdrähte und Folienbahnen ausgebildet sein. Neben der Einbettung in der Flächengebildebahn 1 sind die Metalleiter 2, 3,4 auch in anderer Weise mit der Flächengebildebahn 1 verbindbar, was je nach Material durch Einnadeln, Einweben, Annähen, Aufkleben oder dergleichen erfolgen kann.

An den freien Enden, an denen die durchgehenden Metalleiter 2,3 aus der Flächengebildebahn ragen, sind Buchsen 5 und Stecker 6 als Steckelemente vorgesehen, um die elektrische Verbindung zu Nachfolgebahnen herzustellen. Die Metalleiter 2,3 können auch im Bereich der Enden der Geokunststoff-Folienbahnen 1 freiliegen, um nach dem Verbinden untereinander z.B. in der Kunststoff-Foliennaht wasserdicht eingeschweißt zu werden. Bei anderen Ausführungsformen können die Metalleiter 2,3,4 auch wendel-, schleifen- oder mäanderförmig auf der Flächengebildebahn 1 angeordnet sein.

Die in Fig. 1 gezeigte Anordnung der Metalleiter 2,3,4 bietet insbesondere durch die randseitigen Leiter 2,3 den Vorteil, daß zwei Metalleiter von zwei benachbarten Flächengebildebahnen 1 im Überlappungsbereich in Abstand zueinander liegen. Mittels der nebenenander liegenden randseitige Metalleiter 2,3' von zwei benachbarten Flächengebildebahnen 1 läßt sich gemäß dem erfindungsgemäßen Verfahren, das nachfolgend beschrieben wird, exakt feststellen, wie groß die Überlappungsbreite von zwei Bahnen verläuft. Erfindungsgemäß ist es auch möglich, wie bereits erwähnt, einen einzelnen Metalleiter beim Zusammenschweißen von zwei Geokunststoff-Folien mit in die Naht einzulegen und mit einzuschweißen, um die Lage der Naht später bestimmen zu können, was beispielsweise für Reparaturzwecke notwendig werden kann.

Je nach Anwendungsfall können ein oder mehrere parallel zueinander verlaufende Metalleiter 2,3,4 verwendet werden. Die in Fig. 1 gezeigten randseitigen Leiter 2,3 befinden sich beispielsweise in einem Abstand von 10 cm zum Rand. Auch ist es erfindungsgemäß beispielsweise möglich, Metalleiter 2,3,4 an der Ober- und Unterseite der Geokunststoff-Folienbahn zu befestigen oder bei der in Fig. 1 gezeigten Ausführungsform bestimmte Stellen der Leiter, die an und für sich isoliert sind, frei zu halten. Durch die freigelegten Kontaktstellen lassen sich veränderte Widerstandswerte aufgrund der Bodenfeuchtigkeit zwischen zwei Metalleitern 2,4 ausmessen, um Lecks und Dichtigkeitsprobleme und den Feuchtigkeitsverlauf im Boden zu bestimmen. Hierzu ist es auch möglich, zwei Geokunststoff-Folienbahnen 1 gekreuzt im rechten Winkel übereinander zu legen, um ein Gitterraster zu schaffen oder zusätzliche Leiter in der in Fig. 1 gezeigten Ausführungsform rechtwinklig verlaufend miteinzubetten oder aufzubringen. An einem Beispiel dargestellt können die Leiter 2,3,4 über Verbindungsleitungen 7 mit einem zentralen Anschlußkasten 8 verbunden sein, der einen elektrischen Anschluß 9 aufweist, um wie nachfolgend beschrieben zur Durchführung des erfinderischen Verfahrens einen Sender oder ein Meßgerät anzuschließen.

Gemäß einer weiteren Ausführungsform kann der Metalleiter 4 mit einer ersten Kondensatorplatte verbunden werden, die am Rand der Flächengebildebahn 1 angeordnet ein Koppelelement bildet. Wird eine zweite Kondensatorplatte einer benachbarten Flächengebildebahn 1 überlappend aufgelegt, bildet das Isoliermaterial, gegebenenfalls in Verbindung mit den Flächengebildebahnen das Dielektrikum für einen Kondensator. Die Kopplung der Signale auf den Metalleitern erfolgt daher von einer Flächengebildebahn 1 zur anderen auf kapazitive Weise und keinerlei Steckelemente wie Buchsen 5 und Stecker 6 sind zur Signalübertragung erforderlich.

Nachfolgend wird das erfinderische Verfahren beschrieben. Zuerst werden auf einen Untergrund einzelne oder mehrere Metalleiter 3, 4 aufgebracht. Das Aufbringen kann erfindungsgemäß mit oder ohne Flächengebildebahn 1 erfolgen. Anschließend wird die notwendige mineralische Schicht aufgetragen. Mittels eines Senders wird ein niederfrequentes oder hochfrequentes Wechselspannungssignal an den Anschluß 9 eingespeist oder über eine Induktionsschleife von der Oberseite der mineralischen Schicht aus in die Metalleiter 2,3,4 induziert. Weiter wird an der Oberseite der mineralischen Schicht ein Empfänger positioniert und das von den Metalleitern 2,3,4 abgestrahlte Signal detektiert. Aus der Laufzeit und/oder der Absorption läßt sich die Schichtdicke der mineralischen Schicht bestimmen. In einer anderen Ausführungsform können auch zwei Empfänger verwendet werden, die einen definierten Abstand zueinander aufweisen, über die die Lage und die exakte Tiefe der Metalleiter 2, 3, 4 ermittelt wird. Nach einer weiteren Ausführungsform ist es auch möglich, den Empfänger mit einer zweiten Kondensatorplatte zu versehen, so daß über die dielektrischen Eigenschaften der mineralischen Schicht und die an den Metalleitern 2,3,4 angebrachten ersten Kondensatorplatten die Schichtdicke bestimmt werden kann. Durch Bewegen des Senders entlang der Metalleiter 2,3,4 kann die Schichtdicke streckenmäßig erfaßt werden, was auch bei geneigten Böschungen den kürzesten Abstand zwischen Empfänger und den Metalleitern 2,3,4 liefert. Hierbei ergibt sich der Maximalwert des empfangenen Signals immer dann, wenn der Empfänger im kürzesten Abstand über den Metalleitern 2,3,4 angeordnet wird. Ebenso können Dämpfungswiderstände, die gegenenfalls vorgesehen sein können, das Erkennen des exakten Verlaufs der Metalleiter 2,3,4 bzw. der Flächengebildebahn 1 unterstützen.

Das erfindungsgemäße Verfahren und die erfindungsgemäßen Mittel zum Durchführen des Verfahrens sind beispielsweise einsetzbar im Deponiebau zum Bestimmen von Tondichtungsschichten und eingebauten Müllschichten. Ebenso im Straßenbau/Gleisbau zur Bestimmung von Frostschutzschichten, Fahrbahndicken, Beton- und Asphaltlagen. Im Tunnelbau kann die Dicke des aufgebrachten Spritzbetons bestimmt werden. Für den Hochbau lassen sich Fundamentplatten vermessen.

Darüberhinaus ist die Erfindung auch bei anderen Dickenmessungen, wie beispielsweise in der Qualitätskontrolle von leitenden Formteilen einsetzbar.

### Beispiel:

Auf den als Basis dienenden geebneten Untergrund einer vorgesehenen Deponie werden die mit drei isolierten Drähten 2,3,4 gemäß Fig. 1 versehenen 4 m breiten und 50 m langen Flächengebildebahnen 1 neben und hintereinander überlappend verlegt, wobei die Überlappungsbreite ca. 50 cm beträgt, und zwar sowohl an den überlappenden Längsseiten als auch an den überlappenden Bahnenden. Von den drei in einer Flächengebildebahn 1 angeordneten Drähten 2,3,4 befindet sich der Draht 4 in der Bahnmitte und die beiden anderen Drähte 2,3 jeweils an den Bahnrändern mit einem konstanten Abstand von 10 cm vom Rand. Bei richtiger Verlegung haben dann die beiden Drähte 2,3' im Überlappungsbereich entlang den Längsseiten der Bahnen einen Abstand von 30 cm voneinander. Im Überlappungsbereich an den Bahnenden werden die Drähte der ersten Bahn mit den Drähten der nachfolgenden zweiten Bahn etc. verbunden. Am Ende der jeweiligen letzten Bahn werden die Drähte geerdet. Am jeweiligen Bahnanfang werden die später zur Bestimmung der Schichtdicke und zur Bestimmung der Überlappungsbreite herausragenden Drähte mit dem Signaleinspeisungsgerät verbunden.

Nachdem die Flächengebildebahnen 1 überlappend verlegt wurden, wird über die gesamte so vorbereitete Fläche als mineralische Dichtung eine Tonschicht in einer Schichtdicke von 75 cm aufgebracht.

Zur Bestimmung der Schichtdicke und der Überlappungsbreite wird dann ein Draht nach dem anderen mit dem Signaleinspeisungsgerät verbunden. Zunächst sucht man dann mit dem entsprechenden Detektor in y-Achse den kürzesten Abstand zu den Signale abgebenden Draht. Dies ist dann der Fall, wenn sich der Detektor senkrecht über dem Draht befindet. In x-Achse kann man mit dem Detektor das gesamte Querschnitts-Profil ermitteln. Mit Abfahrung sämtlicher Drähte und der festgehaltenen Querschnitts-Profile erhält man ein flächenhaftes Bild der Dicke der Tonschicht. Bei Bedarf, d.h. bei Nichterfüllung der Solldicke, muß dann zusätzlich Ton aufgebracht werden.

Auf die gleiche Weise bestimmt man den Abstand der beiden Drähte 2,3' und damit die Überlappungsbreite.

## Patentansprüche

1. Verfahren zur zerstörungsfreien Bestimmung der Schichtdicke von aufgebrachten mineralischen Schichten und/oder der zerstörungsfreien Bestimmung der Lage von unterhalb derartiger mineralischer Schichten verlegten Materialien, dadurch gekennzeichnet, daß man
(a) vor dem Aufbringen der mineralischen Schicht mindestens einen elektrisch isolierten Metalleiter auf dem Untergrund, auf dem die mineralische Schicht aufgebracht werden soll, und/oder in den Materialien, die unterhalb der mineralischen Schicht verlegt werden sollen, positioniert,
(b) nach dem Aufbringen der mineralischen Schicht mittels eines Senders ein Signal, insbesondere ein elektromagnetisches Signal, in den Metalleiter eingespeist oder induziert,
(c) das von dem Metalleiter abgestrahlte Signal von einem an der Oberseite der aufgebrachten mineralischen Schicht positionierten Empfänger detektiert, und
(d) aus der Laufzeit und/oder der Absorption des Signals die Schichtdicke der mineralischen Schicht und/oder die Lage der unterhalb der mineralischen Schicht verlegten Materialien ermittelt.

2. Verfahren nach Anspruch 1, dadurch gekennzeichnet, daß man das Signal im Impulsbetrieb einspeist oder induziert.

3. Mittel zur Durchführung des Verfahrens nach Anspruch 1 und 2, dadurch gekennzeichnet, daß der Metalleiter (2, 3, 4) mit einer Flächengebildebahnbahn (1) verbunden ist, wobei er je nach Material vorzugsweise eingewebt, eingenadelt, eingenäht, eingebettet oder aufgeklebt ist.

4. Mittel nach Anspruch 3, dadurch gekennzeichnet, daß sich ein Metalleiter (4) als Mittelleiter in der Mitte längs der Flächengebildebahn (1) erstreckt und parallel dazu verlaufend in den seitlichen Randbereichen der Flächengebildebahn (1) zwei weitere randseitige Leiter (2, 3) vorgesehen sind.

5. Mittel nach Anspruch 3 bis 4, dadurch gekennzeichnet, daß die Metalleiter (2,3,4) mäanderförmig oder schlaufenförmig auf der Flächengebildebahn (1) angeordnet sind.

6. Mittel nach Anspruch 3 bis 5, dadurch gekennzeichnet, daß die Metalleiter (2, 3, 4) elektrisch isolierte Rund- oder Flachdrähte sind.

7. Mittel nach Anspruch 3 bis 6 dadurch gekennzeichnet, daß an den freien Enden der Metalleiter (2,3,4) Steckelemente (5, 6), insbesondere wasser- und feuchtigkeitsdichte Steckkontakte (5) und Steckbuchsen (6) vorgesehen sind.

8. Mittel nach Anspruch 3 bis 7, dadurch gekennzeichnet, daß die einzelnen Metalleiter (2,3,4) in Reihe oder parallel geschaltet und vorzugsweise mit einem zentralen Anschlußkasten (8) verbunden sind.

9. Mittel nach Anspruch 2 bis 11, dadurch gekennzeichnet, daß die Metalleiter (2, 3, 4) mit einer ersten flach auf der Flächengebildebahn (1) aufliegenden Kondensatorplatte verbunden sind, wobei die erste Kondensatorplatte am Rand der Flächengebildebahn (1) im Überlappungsbereich zu einer Nachfolge-Flächengebildebahn (1) über eine zweite damit verbundene Kondensatorplatte angeordnet ist.

10. Mittel nach Anspruch 3 bis 9, dadurch gekennzeichnet, daß die Metalleiter (2, 3, 4) in bestimmten Abständen Dämpfungswiderstände (12) aufweisen.
